# EUROPÄISCHE PATENTSCHRIFT

(11) **EP 0 746 707 B1**
(45) Veröffentlichungstag und Bekanntmachung des Hinweises auf die Patenterteilung: **30.12.1998**
(21) Anmeldenummer: 95911242.6
(22) Anmeldetag: 18.02.1995
(51) Int. Cl.: F16H 61/08

(54) **VERFAHREN ZUM STEUERN EINES AUTOMATISCHEN SCHALTGETRIEBES**
PROCESS FOR CONTROLLING AN AUTOMATIC GEARBOX
PROCEDE DE COMMANDE D'UNE BOITE DE VITESSES AUTOMATIQUE

(30) Priorität: 23.02.1994 DE 4405806
(43) Veröffentlichungstag der Anmeldung: 11.12.1996
(73) Patentinhaber: ZF FRIEDRICHSHAFEN Aktiengesellschaft, 88038 Friedrichshafen (DE)
(72) Erfinder: GIERER, Georg, D-88079 Kressbronn (DE)
(86) Internationale Anmeldenummer: EP9500595
(87) Internationale Veröffentlichungsnummer: WO9523303

(56) Entgegenhaltungen:
- EP-A- 0 322 111
- DE-A- 3 806 741
- DE-A- 4 023 365
- US-A- 5 282 401

## Beschreibung

Die Erfindung betrifft ein Verfahren zum Steuern eines automatischen Schaltgetriebes nach dem Oberbegriff des ersten Anspruches.

Bei automatischen Schaltgetrieben erfolgt ein Übergang von einer ersten niederen Übersetzungsstufe zu einer zweiten höheren Übersetzungsstufe (Rückschaltung), indem eine erste Kupplung öffnet und eine zweite Kupplung schließt. Der Beginn des Druckaufbaus an der zweiten Kupplung und die Druckhöhe am Ende der Schaltung werden hierbei so gewählt, daß die zweite Kupplung das zu übertragende Moment am Synchronpunkt sicher übernimmt. Der Synchronpunkt errechnet sich aus der aktuellen Getriebeausgangsdrehzahl mal dem Übersetzungsverhältnis der zweiten Übersetzungsstufe. Aufgrund von Störgrößen kann es zu einer Verschiebung des Übernahmepunktes kommen. Störgrößen sind z. B.: Toleranzen mechanischer Bauteile, Temperatureinfluß des Druckmediums, Streuung des Reibwerts der Kupplungslamellen und Veränderung des Reibwerts während der Lebensdauer des Getriebes. Die Störgrößen wirken sich auf beide Kupplungen aus. Eine Verschiebung des Übernahmepunktes bewirkt eine deutliche Verschlechterung des Schaltkomforts.
Neben den getriebebezogenen Störgrößen beeinflußt die Leistungsabgabe der Brennkraftmaschine ebenfalls den Schaltkomfort. Bekanntermaßen streut die Leistungsabgabe identischer Brennkraftmaschinen innerhalb der Serie.

Aus der DE-A-40 23 365 ist ein Verfahren zum Schalten eines automatischen Stufenwechselgetriebes gemäß dem Oberbegriff des Anspruchs 1 oder 3 bekannt. Das Verfahren bezieht sich auf eine Rückschaltung. Nach Lösen einer ersten Kupplung schaltet eine zweite Kupplung zu, nachdem eine Zeitstufe abgelaufen ist. Eine Verschlechterung des Schaltkomforts wird durch die Auswertung von drehmomentabhängigen Größen erkannt, z. B. Motor-, Getriebeaggregatverlagerung oder Drehzahländerung der Getriebeabtriebsdrehzahl. Überschreiten diese Größen einen Grenzwert, so wird die Zeitstufe adaptiert.

Die Erfindung hat die Aufgabe, einen konstanten Schaltkomfort bei Rückschaltungen zu gewährleisten.

Die erfindungsgemäße Lösung der Aufgabe umfaßt zwei Möglichkeiten:
Bei einer ersten Lösungsmöglichkeit wird davon ausgegangen, daß eine Getriebeeingangsdrehzahl über den Synchronpunkt hinausläuft. Als Getriebeeingangsdrehzahl im Sinne der Erfindung ist die Drehzahl des Turbinenrades eines hydrodynamischen Wandlers zu verstehen. Für den oben genannten Fall wird vorgeschlagen, daß einem Synchrondrehzahlwert über eine Kennlinie ein Drehzahlwert zugeordnet ist, bei dem der Druckaufbau der zweiten Kupplung beginnt und die Kennlinie adaptiert wird, wenn die Getriebeeingangsdrehzahl größer wird als der Synchrondrehzahlwert.
Hierbei wird die Kennlinie in der Art adaptiert, daß der zugeordnete Drehzahlwert nach der Adaption größer ist als der zugeordnete Drehzahlwert vor der Adaption für den gleichen Synchrondrehzahlwert.
Eine Ausgestaltung hierzu sieht vor, daß zu einem ersten Zeitpunkt ein erster Gradient der Getriebeeingangsdrehzahl und zu einem zweiten Zeitpunkt ein zweiter Gradient der Getriebeeingangsdrehzahl zyklisch ermittelt wird, bei einem Vorzeichenwechsel der Gradienten von Plus nach Minus der Eingangsdrehzahl zum zweiten Zeitpunkt als Maximum gesetzt wird.

Bei einer zweiten Lösungsmöglichkeit wird vorgeschlagen, daß einem Synchrondrehzahlwert über eine Kennlinie ein Drehzahlwert zugeordnet ist, bei dem der Druckaufbau der zweiten Kupplung beginnt, zu einem ersten Zeitpunkt ein erster Gradient und zu einem zweiten Zeitpunkt ein zweiter Gradient der Getriebeeingangsdrehzahl ermittelt wird, eine Differenz berechnet wird von zweitem Gradient minus erstem Gradient, die Kennlinie adaptiert wird, wenn die Differenz einen Grenzwert überschreitet und die Getriebeeingangsdrehzahl zum zweiten Zeitpunkt als Minimum gesetzt wird. In Ausgestaltung hierzu wird vorgeschlagen, daß die Kennlinie in der Art adaptiert wird, daß der zugeordnete Drehzahlwert nach der Adaption kleiner ist als der zugeordnete Drehzahlwert vor der Adaption für den gleichen Synchrondrehzahlwert.
Bei dieser Lösung wird davon ausgegangen, daß die Getriebeeingangsdrehzahl am Übernahmepunkt kleiner ist als die berechnete Synchrondrehzahl, so daß die Kupplung die Getriebeeingangsdrehzahl auf die Synchrondrehzahl hochzieht. Dieser Fall tritt auf, wenn die Brennkraftmaschine eine zu geringe Leistung abgibt oder wenn die abschaltende Kupplung noch nicht vollständig gelöst ist.

Beide erfindungsgemäße Lösungen bieten den Vorteil, daß der Druckaufbau der zweiten Kupplung ereignisabhängig beginnt. Der Startpunkt des Druckaufbaus ist eine Funktion der Getriebeeingangsdrehzahl. Die Adaption bewirkt, daß eine Abweichung des Übernahmepunktes der zweiten Kupplung vom Synchronpunkt für die darauffolgenden Schaltungen beseitigt ist.

In Ausgestaltung der Erfindung wird vorgeschlagen, daß eine Differenz aus Maximum der Getriebeeingangsdrehzahl minus Synchrondrehzahlwert oder Minimum der Getriebeeingangsdrehzahl minus Synchrondrehzahlwert errechnet wird. Die Differenz wird in einem Speicher summiert und die Kennlinie wird adaptiert, wenn die Summe einen positiven Grenzwert überschreitet oder einen negativen Grenzwert unterschreitet.
Durch die Summierung wird der Vorteil erzielt, daß eine Adaption erst dann wirkt, wenn eine dauerhafte Abweichung des Übernahmepunktes vorliegt. Der obere Grenzwert wird nur dann überschritten, wenn bei mehreren Schaltübergängen der Übernahmepunkt bei einer höheren Getriebeeingangsdrehzahl als wie der Synchronpunkt lag.
Als Reaktion auf das Überschreiten des oberen Grenzwertes wird die Kennlinie in der Art adaptiert, daß der zugeordnete Drehzahlwert nach der Adaption größer ist als der zugeordnete Drehzahlwert vor der Adaption für den gleichen Synchrondrehzahlwert.
Der Drehzahlwert ist als relativer Wert zum Synchronpunkt vorgegeben. Relativer Wert bedeutet z. B. 500 Umdrehungen vor Synchronpunkt. Durch die Adaption verschiebt sich somit der Start des Druckaufbaus der zweiten Kupplung zu einem niederen Getriebeeingangsdrehzahlwert.
Bei Unterschreiten des negativen Grenzwertes wird die Kennlinie in der Art adaptiert, daß der zugeordnete Drehzahlwert nach der Adaption kleiner ist als der zugeordnete Drehzahlwert vor der Adaption für den gleichen Synchrondrehzahlwert. Durch die Adaption verschiebt sich somit der Start des Druckaufbaus der zweiten Kupplung zu einem höheren Getriebeeingangsdrehzahlwert.
Nachdem die Adaption ausgeführt wurde, wird der Speicher auf Null gesetzt.
Des weiteren wird vorgeschlagen, daß der Speicherinhalt auf Null gesetzt wird, wenn bei einer vorbestimmten Zahl von Schaltübergängen die Differenz Maximum minus Synchrondrehzahlwert oder Minimum minus Synchrondrehzahlwert Null oder nahezu Null ist. Hierdurch wird der Vorteil erzielt, daß sporadische Abweichungen nicht zwangsläufig zur Adaption der Kennlinie führen. Liegt bei mehreren aufeinanderfolgenden Schaltübergängen keine oder nur eine geringe Abweichung vom Synchronpunkt vor, so wird der Wert aus der sporadischen Abweichung getilgt.

In einer weiteren Ausgestaltung wird vorgeschlagen, daß aus einer Schar von Kennlinien eine Kennlinie in Abhängigkeit vom Temperaturbereich des Getriebeöls, Drehzahlbereich der Getriebeeingangsdrehzahl zu Beginn des Schaltübergangs, Übersetzungsverhältnis der ersten Übersetzungsstufe und Fahrzeitanteil in der ersten Übersetzungsstufe ausgewählt wird.

Als Eingangsvoraussetzung für eine Adaption wird vorgeschlagen, daß eine Änderung eines Drosselklappensignals kleiner einem Grenzwert ist, kein Zug/Schub-Wechsel oder umgekehrt während des Schaltübergangs auftritt und die Getriebeöltemperatur größer einem Grenzwert ist.

In der Zeichnung sind die Ausführungsbeispiele des Steuerungsverfahrens dargestellt.
Es zeigen:
- Fig. 1: Zeit-Diagramm für einen Schaltübergang;
- Fig. 2: Getriebeeingangsdrehzahl-Verlauf für drei verschiedene Schaltübergänge und
- Fig. 3: Kennlinie der Adaption.

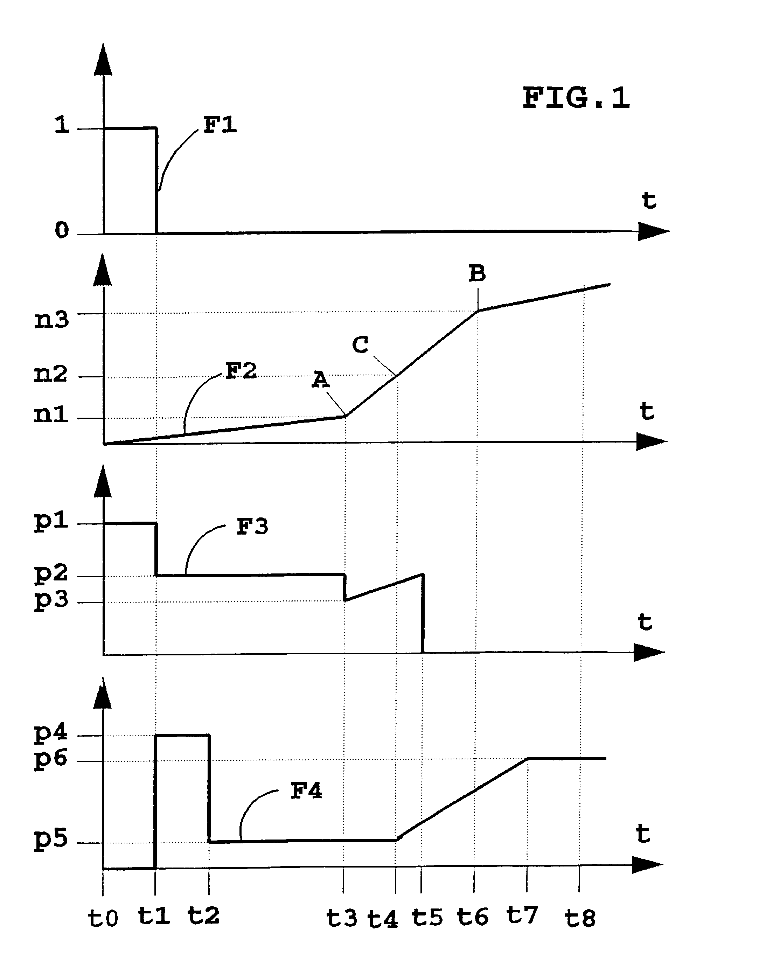

In Fig. 1 dargestellt ist ein Übergang von einer ersten Übersetzungsstufe zu einer zweiten Übersetzungsstufe. Mit F1 bezeichnet ist der Verlauf eines elektromagnetischen Ventils, F2 bezeichnet den Verlauf der Getriebeeingangsdrehzahl, F3 den Druckverlauf der ersten Kupplung und F4 den Druckverlauf der zweiten Kupplung. Der Verlauf F4 besteht aus: Schnellfüllphase, Füllausgleichsphase, Druckaufbaurampe und Übergang auf Enddruck.

Der Schaltübergang beginnt im Zeitpunkt tl mit Ausgabe des Schaltbefehls durch das elektromagnetische Ventil, F1 geht von 1 auf 0 über. Mit Ausgabe des Schaltbefehls verringert sich der Druck an der ersten Kupplung von einem Anfangswert p1 auf den neuen Wert p2. Gleichzeitig wird die zweite Kupplung im Zeitraum t1 bis t2 mit hohem Druck p4, dem Schnellfülldruck, beaufschlagt. Durch den Schnellfülldruck wird die zweite Kupplung vorgefüllt.
Nach der Schnellfüllphase beginnt im Zeitpunkt t2 die Füllausgleichsphase der zweiten Kupplung. In der Füllausgleichsphase wird die zweite Kupplung mit dem Druckmedium befüllt, Druckhöhe p5. Die Füllausgleichsphase ist bei t4 beendet. Im Zeitpunkt t4 liegt ein Kupplungsanlageelement an den Reibelementen der Kupplung an. Es wird noch kein Moment übertragen. Während der Füllausgleichsphase wird zum Zeitpunkt t3 der Druck an der ersten Kupplung vom Druckwert p2 auf p3 verringert. Dadurch kann der Motor frei hochdrehen bzw. die Getriebeeingangsdrehzahl steigt stärker an, Punkt A.
Im Punkt C übersteigt die Getriebeeingangsdrehzahl den Drehzahlwert n2. Mit Überschreiten des Drehzahlwertes n2 wird der Druckaufbau an der zweiten Kupplung ausgelöst, Zeitpunkt t4. Der Drehzahlwert n2 ergibt sich aus dem berechneten Drehzahlwert des Synchronpunktes der zweiten Kupplung und einem Drehzahlwert, der dem Synchronpunkt über eine Kennlinie zugeordnet ist. Der Drehzahlwert ist als relativer Wert zum Synchronpunkt vorgegeben. Relativer Wert bedeutet z. B. 500 Umdrehungen vor Synchronpunkt. In Fig. 1 ist dies die Drehzahldifferenz n3 - n2. Der Synchronpunkt berechnet sich aus der Getriebeausgangsdrehzahl mal dem Übersetzungsverhältnis der zweiten Übersetzungsstufe. Hierbei wird die Berechnung des Synchronpunktes während des Schaltübergangs aktualisiert. Punkt B bezeichnet den berechneten Synchrondrehzahlwert n3.
Bei t5 öffnet die erste Kupplung vollständig. Zum Zeitpunkt t6 hat die Getriebeeingangsdrehzahl den Synchrondrehzahlwert n3 erreicht, Punkt B. Im Punkt B hat die zweite Kupplung das Moment vollständig übernommen.
Die zweite Kupplung erreicht den Druckendwert p6 zum Zeitpunkt t7. Der Druckendwert p6 ist so gewählt, daß die zweite Kupplung das Moment sicher übertragen kann. Bei t8 ist der Übergang beendet.

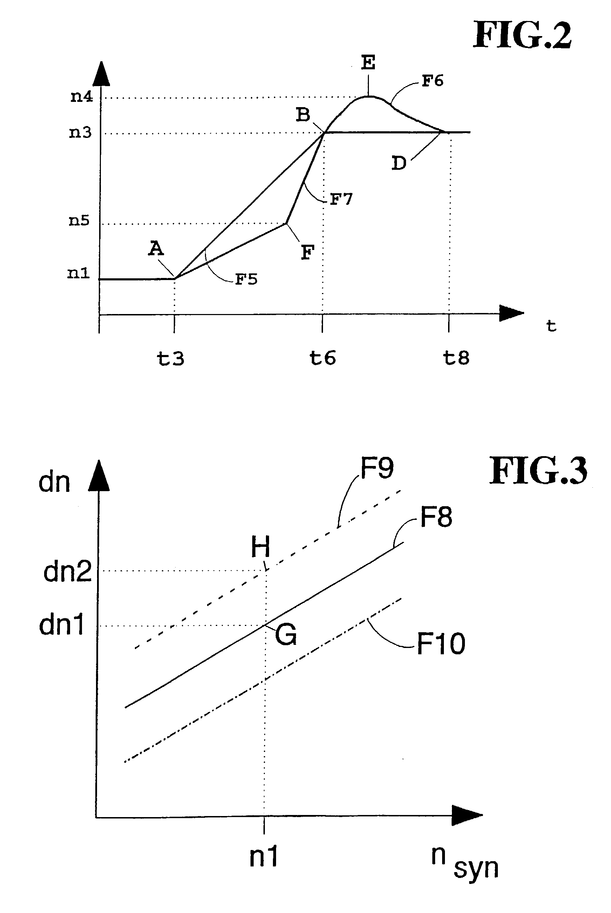

In Fig. 2 dargestellt ist der Verlauf der Getriebeeingangsdrehzahl für drei verschiedene Übergänge aus einer ersten Übersetzungsstufe in eine zweite Übersetzungsstufe: F5 mit den Punkten A, B, und D bezeichnet einen idealen Verlauf der Getriebeeingangsdrehzahl.
F6 mit den Punkten A, B, E und D kennzeichnet eine Kupplung, deren Übernahmepunkt nach dem Synchronpunkt B liegt. Die Getriebeeingangsdrehzahl läuft somit über den Synchrondrehzahlwert n3 hinaus. Erst im Punkt E beginnt die zweite Kupplung das Moment zu übernehmen. Da die Getriebeeingangsdrehzahl im Punkt E, Drehzahlwert n4, größer ist als der Synchronpunkt, Drehzahlwert n3, zieht die zweite Kupplung die Getriebeeingangsdrehzahl auf den Drehzahlwert n3 herab. F7 mit den Punkten A, F, B und D zeigt einen Drehzahlverlauf, wie er durch mangelnde Leistungsabgabe der Brennkraftmaschine oder verzögertes Abschalten der ersten Kupplung verursacht wird. Dadurch ist der Gradient der Getriebeeingangsdrehzahl im Bereich zwischen den Punkten A und F kleiner als der Idealverlauf. Im Punkt F übernimmt die zweite Kupplung das Moment. Der Getriebeeingangsdrehzahlwert n5 am Punkt F ist kleiner als der Drehzahlwert n3 des Synchronpunktes B. Die zweite Kupplung zieht die Getriebeeingangsdrehzahl auf das Drehzahlniveau n3 hoch. Dies zeigt sich in einer deutlichen Gradientenänderung der Getriebeeingangsdrehzahl.

Fig. 3 zeigt eine Adaptions-Kennlinie. Hierbei bildet die Drehzahl des Synchronpunktes die Abszisse. Der Synchronpunkt berechnet sich aus der Getriebeausgangsdrehzahl mal dem Übersetzungsverhältnis der zweiten Übersetzungsstufe. Auf der Ordinate sind Drehzahlwerte dn aufgetragen. Eine mit F8 bezeichnete Funktion, dargestellt ist eine Gerade, ordnet einem Abszissenwert nl den entsprechenden Ordinatenwert dnl zu, Punkt G. Der Betrag dnl legt den Start des Druckaufbaus der zweiten Kupplung fest, z. B. dnl entspricht 500 Umdrehungen, so bedeutet dies, daß der Druckaufbau der zweiten Kupplung 500 Umdrehungen vor dem Synchronpunkt beginnt. F9 zeigt eine zu höheren dn-Werten parallel verschobene Gerade. Dadurch wird dem Synchrondrehzahlwert nl ein höherer Drehzahlwert dn2 zugeordnet. F9 kennzeichnet somit den Fall, daß die Getriebeeingangsdrehzahl über den Synchronpunkt hinausläuft, Verlauf F6 aus Fig. 2.
F10 ist eine zu niederen Drehzahlwerten von dn parallel verschobene Gerade. Dies ist dann der Fall, wenn die Getriebeeingangsdrehzahl am Übernahmepunkt kleiner ist als der Synchronpunkt, Verlauf F7 aus Fig. 2.

### Bezugszeichen

- F1: Verlauf Magnetventil
- F2: Verlauf Getriebeeingangsdrehzahl
- F3: Druckverlauf erste Kupplung
- F4: Druckverlauf zweite Kupplung
- F5: idealer Verlauf Getriebeeingangsdrehzahl
- F6: Getriebeeingangsdrehzahl-Verlauf, störgrößenbehaftet
- F7: Getriebeeingangsdrehzahl-Verlauf, störgrößenbehaftet
- F8: Adaptionskennlinie
- F9: adaptierte Kennlinie
- F10: adaptierte Kennlinie

## Patentansprüche

1. Verfahren zum Steuern eines automatischen Schaltgetriebes, bei dem ein Übergang von einer ersten niederen Übersetzungsstufe zu einer zweiten höheren Übersetzungsstufe erfolgt, indem eine erste Kupplung öffnet (F3) und eine zweite Kupplung schließt (F4), wobei aus Getriebeausgangsdrehzahl mal Übersetzungsverhältnis der zweiten Übersetzungsstufe eine Synchrondrehzahl errechnet wird, dadurch **gekennzeichnet,** daß einem Synchrondrehzahlwert über eine Kennlinie (F8) ein Differenzdrehzahlwert (dn) zugeordnet ist, der Druckaufbau der zweiten Kupplung bei einem Drehzahlwert beginnt, welcher sich aus dem Synchrondrehzahlwert minus dem Differenzdrehzahlwert (dn) berechnet und die Kennlinie (F8) adaptiert wird, wenn die Getriebeeingangsdrehzahl größer wird als der Synchrondrehzahlwert, wobei die Kennlinie (F8) in der Art adaptiert wird, daß der zugeordnete Differenzdrehzahlwert (dn) nach der Adaption größer ist als der zugeordnete Differenzdrehzahlwert vor der Adaption für den gleichen Synchrondrehzahlwert (F9).

2. Verfahren nach Anspruch 1, dadurch **gekennzeichnet,** daß zu einem ersten Zeitpunkt ein erster Gradient der Getriebeeingangsdrehzahl (F2) und zu einem zweiten Zeitpunkt ein zweiter Gradient der Getriebeeingangsdrehzahl (F2) zyklisch ermittelt wird, bei einem Vorzeichenwechsel der Gradienten von plus nach minus der Eingangsdrehzahlwert zum zweiten Zeitpunkt als Maximum gesetzt wird.

3. Verfahren zum Steuern eines automatischen Schaltgetriebes, bei dem ein Übergang von einer ersten niederen Übersetzungsstufe zu einer zweiten höheren Übersetzungsstufe erfolgt, indem eine erste Kupplung öffnet (F3) und eine zweite Kupplung (F4) schließt, wobei aus Getriebeausgangsdrehzahl mal Übersetzungsverhältnis der zweiten Übersetzungsstufe eine Synchrondrehzahl errechnet wird, dadurch **gekennzeichnet,** daß einem Synchrondrehzahlwert über eine Kennlinie (F8) ein Differenzdrehzahlwert (dn) zugeordnet ist, der Druckaufbau der zweiten Kupplung bei einem Drehzahlwert beginnt, welcher sich aus dem Synchrondrehzahlwert minus dem Differenzdrehzahlwert berechnet, zu einem ersten Zeitpunkt ein erster Gradient und zu einem zweiten Zeitpunkt ein zweiter Gradient der Getriebeeingangsdrehzahl (F2) ermittelt wird, eine Differenz von zweitem Gradient minus erstem Gradient berechnet wird, die Kennlinie (F8) adaptiert wird, wenn die Differenz einen Grenzwert überschreitet und die Getriebeeingangsdrehzahl zum zweiten Zeitpunkt als Minimum gesetzt wird, wobei die Kennlinie (F8) in der Art adaptiert wird, daß der zugeordnete Differenzdrehzahlwert (dn) nach der Adaption kleiner ist als der zugeordnete Differenzdrehzahlwert vor der Adaption für den gleichen Synchrondrehzahlwert (F10).

4. Verfahren nach den Ansprüchen 2 oder 3, dadurch **gekennzeichnet,** daß eine Differenz errechnet wird aus Maximum minus Synchrondrehzahlwert oder Minimum der Getriebeeingangsdrehzahl minus Synchrondrehzahlwert, die Differenz in einem Speicher summiert wird und die Kennlinie adaptiert wird, wenn die Summe einen positiven Grenzwert überschreitet oder einen negativen Grenzwert unterschreitet.

5. Verfahren nach Anspruch 4, dadurch **gekennzeichnet,** daß der Speicherinhalt auf Null gesetzt wird, wenn bei einer vorbestimmten Zahl von Schaltübergängen die Differenz Maximum der Getriebeeingangsdrehzahl minus Synchrondrehzahlwert oder Minimum der Getriebeeingangsdrehzahl minus Synchrondrehzahlwert Null oder nahezu Null ist.

6. Verfahren nach den Ansprüchen 1 oder 3, dadurch **gekennzeichnet,** daß aus einer Schar von Kennlinien eine Kennlinie in Abhängigkeit vom Temperaturbereich des Getriebeöls, Drehzahlbereich der Getriebeeingangsdrehzahl zu Beginn des Schaltübergangs, Übersetzungsverhältnis der ersten Übersetzungsstufe und Fahrzeitanteil in der ersten Übersetzungsstufe ausgewählt wird.

7. Verfahren nach einem der vorausgegangenen Ansprüche, dadurch **gekennzeichnet,** daß eine Adaption nur dann bewertet wird, wenn während des Schaltübergangs eine Änderung des Drosselklappensignals kleiner einem Grenzwert ist, kein Zug/Schub-Wechsel oder umgekehrt auftritt und die Getriebeöltemperatur größer einem Grenzwert ist.

## Claims

1. Method for controlling an automatic gearbox, in which a transition occurs from a first, lower transmission stage to a second, higher transmission stage in that a first clutch opens (F3) and a second clutch closes (F4), a synchronising rotational speed being calculated by multiplying the gearbox output speed by the transmission ratio of the second transmission stage, characterised in that a differential rotational speed (dn) is associated with a synchronising rotational speed by means of a characteristic curve (F8), the pressure build-up of the second clutch begins at a rotational speed value which is calculated from the synchronising rotational speed value minus the differential rotational speed value (dn) and the characteristic curve (F8) is adapted if the gearbox input rotational speed is greater than the synchronising rotational speed value, the characteristic curve (F8) being adapted in such a manner that the associated differential rotational speed value (dn) is greater following adaptation than the associated differential rotational speed prior to the adaptation for the same synchronising rotational speed value (F9).

2. Method according to claim 1, characterised in that at a first point in time a first gradient of the gearbox input rotational speed (F2) is cyclically determined and at a second point in time a second gradient of the gearbox input rotational speed (F2) is cyclically determined and in the case of a sign change in the gradients from plus to minus the input rotational speed value at the second point in time is set as the maximum value.

3. Method for controlling an automatic gearbox, in which a transition occurs from a first, lower transmission stage to a second, higher transmission stage in that a first clutch opens (F3) and a second clutch closes (F4), a synchronising rotational speed being calculated by multiplying the gearbox output speed by the transmission ratio of the second transmission stage, characterised in that a differential rotational speed (dn) is associated with a synchronising rotational speed by means of a characteristic curve (F8), the pressure build-up of the second clutch begins at a rotational speed value which is calculated from the synchronising rotational speed value minus the differential rotational speed value, at a first point in time a first gradient and at a second point in time a second gradient of the gearbox input rotational speed (F2) are determined, a difference of the second gradient minus the first gradient is calculated, the characteristic curve (F8) is adapted if the difference exceeds a threshold value and the gearbox input rotational speed at the second point in time is set as a minimum, the characteristic curve (F8) being adapted in such a manner that the associated differential rotational speed value (dn) following the adaptation is smaller than the associated differential rotational speed value prior to the adaptation for the same synchronising rotational speed value (F10).

4. Method according to claims 2 or 3, characterised in that a difference is calculated from the maximum minus the synchronising rotational speed value or from the minimum gearbox input rotational speed minus the synchronising rotational speed value, the difference is added in a store and the characteristic curve is adapted if the sum exceeds a positive threshold value or falls below a negative threshold value.

5. Method according to claim 4, characterised in that the store content is set to zero if the difference of the maximum gearing input rotational speed minus the synchronising rotational speed value or the minimum gearing input rotational speed minus the synchronising rotational speed is zero or almost zero after a predetermined number of gear shifts.

6. Method according to claims 1 or 3, characterised in that a characteristic curve is selected from a range of characteristic curves as a function of the temperature range of the transmission oil, rotational speed range of the gearbox input rotational speed at the start of the shift transition, transmission ratio of the first transmission stage and travel time component in the first transmission stage.

7. Method according to one of the preceding claims, characterised in that an adaptation is only assessed if a change in the throttle valve signal falls below a threshold value, if there is no traction/thrust change or vice versa, and if the transmission oil temperature exceeds a threshold value during the shift transition.

## Revendications

1. Procédé pour commander une boîte de vitesses automatique, comportant une transition d'un premier palier de transmission vers un deuxième palier de transmission plus élevé , dans lequel un premier embrayage (F3) ouvre et un deuxième embrayage (F4) ferme, une vitesse de synchronisation étant calculée à partir de la vitesse de sortie de la boîte de vitesses multipliée par le rapport des changements de vitesse du deuxième palier de transmission, **caractérisé** en ce qu'une valeur de la vitesse différentielle (dn) est affectée au moyen d'une courbe caractéristique (F8) à une valeur de la vitesse de synchronisation, la montée en pression du deuxième embrayage commençant à une valeur de vitesse qui se calcule à partir de la valeur de la vitesse de synchronisation moins la valeur de la vitesse différentielle (dn), et la courbe caractéristique (F8) étant adaptée lorsque la vitesse d'entrée de la boîte de vitesses devient supérieure à la valeur de la vitesse de synchronisation, la courbe caractéristique (F8) étant adaptée de telle sorte que la valeur de la vitesse différentielle attribuée (dn) est, après l'adaptation, supérieure à la valeur de la vitesse différentielle attribuée avant l'adaptation pour la même valeur de la vitesse de synchronisation (F9).

2. Procédé selon la revendication 1, **caractérisé** en ce qu'à un premier moment, un premier gradient de la vitesse d'entrée de la boîte de vitesses (F2), et à un deuxième moment, un deuxième gradient de la vitesse d'entrée de la boîte de vitesses (F2) est déterminé de façon cyclique, la valeur de la vitesse d'entrée étant fixée comme maximum lors d'un changement du signe des gradients de plus vers moins, de la valeur de la vitesse d'entrée au deuxième moment.

3. Procédé pour commander une boîte de vitesses automatique, comportant une transition d'un premier palier de transmission vers un deuxième palier de transmission plus élevé , dans lequel un premier embrayage (F3) ouvre et un deuxième embrayage (F4) ferme, une vitesse de synchronisation étant calculée à partir de la vitesse de sortie de la boîte de vitesses multipliée par le rapport des changements de vitesse du deuxième palier de transmission, **caractérisé** en ce qu'une valeur de la vitesse différentielle (dn) est affectée au moyen d'une courbe caractéristique (F8) à une valeur de la vitesse de synchronisation, la montée en pression du deuxième embrayage commençant à une valeur de vitesse qui se calcule à partir de la valeur de la vitesse de synchronisation moins la valeur de la vitesse différentielle, lors d'un premier moment, un premier gradient, et lors d'un deuxième moment, un deuxième gradient de la vitesse d'entrée de la boîte de vitesse (F2), étant déterminé, une différence du deuxième gradient moins le premier gradient étant calculée, l'adaptation de la courbe caractéristique (F8) étant effectuée lorsque la différence dépasse une valeur limite et la vitesse d'entrée de la boîte de vitesses étant fixée comme minimum lors du deuxième moment, la courbe (F8) étant adaptée de telle façon que la valeur de la vitesse différentielle (dn) correspondante est inférieure après l'adaptation à la valeur de la vitesse différentielle attribuée avant l'adaptation pour la même valeur de la vitesse de synchronisation (F10).

4. Procédé selon les revendications 2 ou 3, **caractérisé** en ce qu'une différence est calculée à partir du maximum moins la valeur de la vitesse de synchronisation ou du minimum de la vitesse d'entrée de la boîte de vitesses moins la valeur de la vitesse de synchronisation, la différence étant totalisée dans une mémoire et la courbe caractéristique étant adaptée lorsque la somme dépasse une valeur limite positive ou devient inférieure à une valeur limite négative.

5. Procédé selon la revendication 4, **caractérisé** en ce que le contenu de la mémoire est mis à zéro lorsque, pour un nombre de transitions donné, la différence constituée par le maximum de la vitesse d'entrée de la boîte de vitesses moins la valeur de la vitesse de synchronisation ou le minimum de la vitesse d'entrée de la boîte de vitesses moins la valeur de la vitesse de synchronisation est nulle ou proche zéro.

6. Procédé selon les revendications 1 ou 3, **caractérisé** en ce que, à partir d'un groupe de courbes caractéristiques, une courbe caractéristique est sélectionnée en fonction de la plage de température de l'huile à engrenages, de la plage de vitesse de rotation de la vitesse d'entrée de la boîte de vitesses au début de la transition du changement de vitesse, du rapport des changements de vitesse du premier palier de translation et de la part du temps de conduite dans le premier palier de translation.

7. Procédé selon l'une des revendications précédentes, **caractérisé** en ce qu'une adaptation n'est pondérée que si, pendant la transition du changement de vitesse, une modification du signal du clapet d'étranglement est inférieur à une valeur limite, qu'il ne se produit pas un changement traction/poussée ou inversement et que la température de l'huile à engrenages est supérieure à une valeur limite.
